# EUROPEAN PATENT SPECIFICATION

(11) **EP 1 431 127 B1**
(45) Date of publication and mention of the grant of the patent: **18.04.2007**
(21) Application number: 02800242.6
(22) Date of filing: 25.09.2002
(51) Int. Cl.: B60R 16/02, G06F 3/00

(54) **AGENT APPARATUS**
VORRICHTUNG ZUM SAMMELN VON FUNKTIONEN MIT EINEM AGENTEN
APPAREIL AGENT

(30) Priority: 28.09.2001 JP 2001303606
(43) Date of publication of application: 23.06.2004
(73) Proprietor: Kabushikikaisha Equos Research, Tokyo 101-0021 (JP)
(72) Inventor: KUBOTA, Tomoki c/o Kabushiki Kaisha Equos Research, Tokyo 101-0021 (JP); HORI, Koji c/o Kabushiki Kaisha Equos Research, Tokyo 101-0021 (JP); KONDO, Hiroaki c/o Kabushiki Kaisha Equos Research, Tokyo 101-0021 (JP); MATSUDA, Manabu Kabushiki Kaisha Equos Research, Chiyoda-ku, Tokyo 101-0021 (JP); ADACHI, Kazuhide Kabushiki Kaisha Equos Research, Tokyo 101-0021 (JP); HIRANO, Tadashi Kabushiki Kaisha Equos Research, Chiyoda-ku, Tokyo 101-0021 (JP)
(74) Representative: Vossius & Partner
(86) International application number: PCT/JP2002/009867
(87) International publication number: WO 2003/029053

(56) References cited:
- EP-A- 1 462 317
- JP-A- 11 037 766
- JP-A- 2000 221 049
- JP-A- 2001 235 343

## Description

### Technical Field

This invention relates to an agent apparatus and, specifically, to an agent apparatus which automatically collects information on a vehicle driver through conversation with an agent.

### Background Art

Document US6,351,698 which corresponds to JP 2000/22 1049 discloses a driver information collecting apparatus, comprising:
a question outputter to output a question on the driver, and
an information obtainer to obtain driver information based on a reply by the driver to the question by said question outputter.

An agent apparatus to present an agent within a vehicle which actively conducts communication such as conversation with a user by sensing a state of the vehicle is proposed in the Japanese Patent Laid-open No. Hei 11-37766.

In the agent apparatus, for example, the remaining quantity of fuel such as gasoline, light oil, and the like is detected, such detected values for the past five times immediately prior to refueling are stored, and when the average value thereof is reached, a time to refuel is notified by the agent.

In such an agent apparatus, the more information on a user is collected, the more information desired by the user can be provided or the more conversations can be carried out. Accordingly, it is important for an agent apparatus to collect as much information on a driver as possible.

However, in various agent apparatuses previously proposed, the user himself/herself inputs each item on hobbies or preferences as driver information at an initial state in which the use of the agent apparatus is commenced.

As described above, since the prior apparatuses are dependent on the inputting operation by the user himself/herself to collect the driver information, the load by the inputting operation by the user is large, and there is even a case in which only the bare minimum of information (essential input items without which a startup is impossible) is obtained.

The present invention was made in order to solve the above problem, and it is an object of the present invention to collect information on a driver as much as possible while placing the smallest possible burden on the driver.

### Disclosure of the Invention

The present invention attains the aforesaid object by including in an agent apparatus: a load-on-driver detector to detect a load on a driver; a question outputter to output questions about the driver when a low-load state is detected by the load-on-driver detector; and an information obtainer to obtain information on the driver based on the driver's reply to the question made by the question outputter.

Further in the present invention, in the agent apparatus described in claim 1, a driver information storage to store driver information and a question information storage to store questions to obtain the driver information are provided, and the question outputter referred to above reads out, from the question information storage, a question which corresponds to a driver information not stored in the driver information storage and outputs the question.

Furthermore in the present invention, in the agent apparatus described in claim 1 or claim 2, as a state of a driver detected by the condition detector referred to above, at least one of a state of driving operation and a state of equipment manipulation is detected; and a state of a load on a driver determined by the load-on-driver determiner referred to above is at least one of a load imposed by the driving operation and an extent of vexation felt by the driver.

Moreover in the present invention, in the agent apparatus described in claim 1, claim 2, or claim 3, an agent presenter to present an artificial pseudo-living organism within the vehicle is provided, and the question outputter referred to above poses questions through at least one of a display screen and voice output.

### Brief Description of Drawings

FIG. 1 is a block diagram showing a structure of an agent apparatus which realizes a driver information collecting apparatus in an embodiment of the present invention.
FIG. 2. is a block diagram showing an agent processing unit in the agent apparatus.
FIG. 3 is an explanatory view conceptually showing a data configuration and data contents in a scenario file in the agent apparatus
FIG. 4 is an explanatory view conceptually showing a composition of driver information in the agent apparatus.
FIG. 5 is a flowchart showing operations of a scenario automatic startup determination process.
FIG. 6 is a flowchart showing operations of a scenario driving process.
FIG. 7 is an explanatory view showing a transition of scene screens by presenting each scene in a question scenario on hobbies and preferences (on food) among question scenarios in the agent apparatus.

### Best Mode for Carrying out the Invention

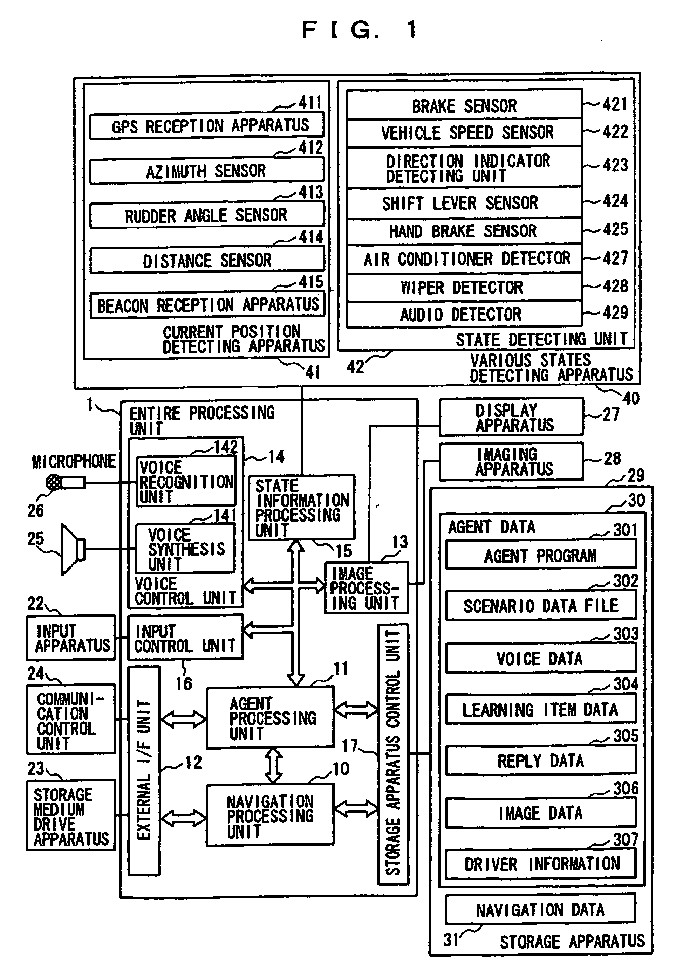

Hereinafter, a preferable embodiment of a driver information collecting apparatus of the present invention will be explained in detail with reference to FIGS 1 to 7.

### (1) Overview of the embodiment

In an agent apparatus realizing the driver information collecting apparatus in the present embodiment, a personified agent is presented through a screen image (a two-dimensional image, three-dimensional image such as one via holography, and the like) to let the agent perform various communications with a driver, or representively conduct operations.

Driver information pertaining to the driver such as age, gender, and hobbies necessary to perform communications and the like with the agent according to preferences of the driver (user) is obtained and added by questions by the agent.

The questions for obtaining the driver information are posed by the agent by judging the state of the load of driving operation or manipulation of various equipment by the driver, and when in a low-load state, questions related to driver information which has not yet been obtained are outputted (through voice and image) in the order of highest priority.

By the driver's replies to the questions posed by the agent, the driver information is obtained and stored, which is then reflected in communications with the driver and the behavior of the agent.

For example, when the driver travels a straight road at a constant speed, not by particularly listening to music or the like for a predetermined period of time or more, the agent asks the driver a question of what type of cuisine he/she likes (driver information of the highest priority which has not been obtained). The replying result from the driver is stored in the driver information (data on hobbies and preferences), and thereafter the stored data on hobbies and preferences are reflected when recommending a restaurant (meal) to the driver in such a manner that the priority for recommending a restaurant of the genre preferred by the driver becomes high.

As described above, by outputting questions pertaining to driver information as a part of communications with the agent, the driver information can be obtained automatically, and thereby the driver is released from the vexation of inputting all of the driver information in advance

Further, since the questions pertaining to the driver information are outputted by selecting a timing at which the load on the driver is less, a question is not outputted when the driver is manipulating equipment such as an air conditioner, performing a driving operation including steering, listening to an audio equipment or the radio, or chatting with someone in the vehicle, so that a vexation felt by the driver can be avoided.

In addition, since the agent apparatus obtains and stores the driver information automatically while communicating with the driver, the more the driver answers to questions, the more information and communication suitable for the driver's hobbies and preferences the agent apparatus can provide.

Additionally, the agent in the present embodiment is an artificial pseudo-living organism, and its figure (two-dimensional image, three-dimensional image like holography, and so forth) is presented within the vehicle by an image display apparatus. The proceedings by the agent are determining on and learning of the state of the vehicle regarding the vehicle itself, passengers, oncoming vehicles, and so forth (the learning not only on the state but also on answers and replies from the driver), in which, based on the state of the vehicle at each time point and the learning outcome up to that time point, the agent responds with wide variations (its behavior = action and voice) to the driver and the vehicle. This allows the driver to call up a plurality of agents within the vehicle at liberty and make the in-vehicle environment comfortable.

Here, the artificial pseudo-living organism (agent) in the present embodiment has identity of subject such as a specific person, a creature, a comic character and the like, and such a pseudo-living organism having the identity performs outputting (responds with action and voice) in such a manner that the identity and continuity of the subject is maintained. Further, the agent in the present embodiment whose identity and continuity are expressed as something with a unique character, and which is presented in the vehicle, has a produced voice, image and the like that vary according to the contents learned in the past even in the same vehicle state.

### (2) Details on the embodiment

FIG. 1 is a block diagram showing a structure of the agent apparatus which realizes the driver information collecting apparatus in the present embodiment.

In the present embodiment, an entire processing unit 1 controlling the entire communication functions is provided. The entire processing unit includes: a navigation processing unit 10, to search a route to the set destination and perform guidance through voice or displayed image; an agent processing unit 11; an external I/F unit 12, to correspond to the navigation processing unit 10 and the agent processing unit 11; an image processing unit 13, in which outputting of images such as an agent image, map image, and the like, as well as inputted images are processed; a voice control unit 14, in which outputting of voice such as the voice of the agent and the route guidance voice as well as inputted voice are controlled; a state information processing unit 15, to process the detected data on various states on the vehicle or the driver; an input control unit 16; and a storage apparatus control unit 17.

The agent processing unit 11 determines the load on the driver from the state inside and outside of the vehicle, the operating state by the driver, and so forth, and asks questions to obtain the driver information which has not been accumulated when the load on the driver is low, to obtain and save the driver information from the reply as described later.

The navigation processing unit 10 and the agent processing unit 11 include a CPU (central processing unit) to control the data processing and the operations of each unit, and a ROM, a RAM, a timer and so forth connected to the CPU through bus lines such as a data bus, a control bus, and the like. The both processing units 10 and 11 are connected by a network (in-vehicle LAN (local area network)) in a manner that the processed data can be obtained from each other.

The ROM is a read-only memory to store in advance various data and programs for performing control in the CPU, and the RAM is a random access memory which the CPU uses as a working memory.

In the navigation processing unit 10 and the agent processing unit 11 in the present embodiment, the CPU reads the various programs stored in the ROM, and carries out various processings. Note that the CPU may read a computer program from an external storage medium set in the storage medium drive apparatus 23, store (install) the program in another storage apparatus such as an agent data storage apparatus 30, navigation data storage apparatus 31 or a hard disk not shown, read (load) a necessary program or the like from the storage media into the RAM, and execute it. Further, a necessary program or the like may be executed by being read directly from the storage medium drive apparatus 23 into the RAM.

In the present embodiment, the agent processing unit 11 creates various communicating behaviors of the agent including conversation with the driver and the handling operations to be performed in the navigation processing section 10, by assuming various states (cases) on the vehicle or the driver as well as driver information outcomes, and performs them according to a scenario. In other words, where various states such as vehicle speed, time, traveling region, temperature, remaining volume of gasoline, psychological distance, and driver information are the scenario startup conditions and the scene branching conditions, the actions to be taken by the agent for each condition are defined as a scenario for each condition.

Each scenario is consisted of a plurality of continuous scenes. A scene is a situated stage in a scenario, in which the agent poses a certain question, or provides information. Each scene is composed of a title, list, word balloon, background, and other small units (parts).

Each scene is preceded sequentially according to the scenario. Depending on the scenario, a plurality of selective scenes exist according to the driver's reply to a question posed in a certain scene, the situation of the vehicle, and the like. In other words, there are scenarios in which a scene branches according to a reply in the course of the scenario.

The data on the scenarios including the scenes are stored in the scenario data file 302 which will be described later. Summarized by each scene and stored as scenario data 1 to n of the scenario data file 302 are: the information to define when and where to execute a scenario (scenario startup condition), and when the scenario is executed, the data to define what behavior or conversation is performed by the agent and how the screen is arranged, what sort of instruction is issued to a module such as the navigation processing unit 10 and so forth, and what will be performed in the following (which scene should be selected) when receiving an event.

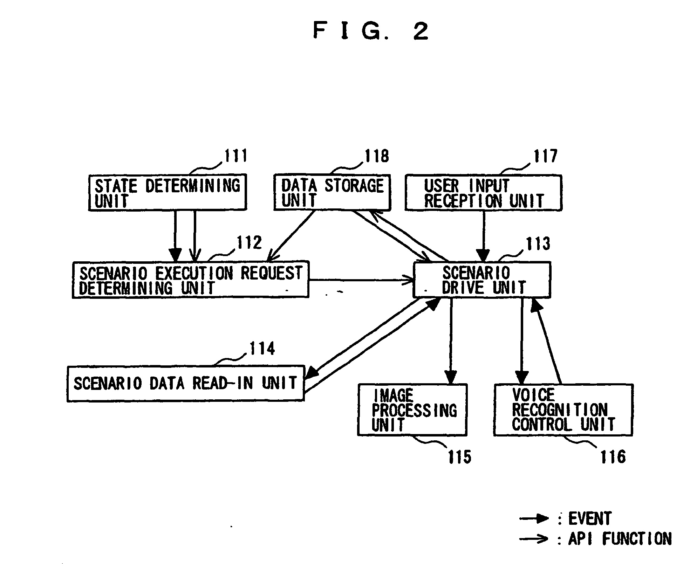

FIG. 2 shows a structure of the agent processing unit 11.

As shown in FIG. 2, the agent processing unit 11 includes a state determining unit 111, a scenario execution request determining unit 112, a scenario drive unit 113, a scenario data read-in unit 114, an image processing unit 115, a voice recognition control unit 116, a user input reception unit 117, and a data record unit 118.

Each of the units 111 to 118 are realized by a corresponding engine (software) stored in the CPU, the ROM, and so forth provided in the agent processing unit 11. The engine constituting each unit such as the state determination unit 111 and the like issue a corresponding event when transmitting data to other engine. The events issued by units 111 to 118 does not include an event to determine whether a scene should branch or not.

The state determining unit 111 is equipped with an API (application programming interface) notifying of a change in a state of time, place, various inputs, or the like. The state determining unit 111 issues an event to the scenario execution request determining unit 112 according to a change in the states (the set destination or the like).

The scenario execution request determining unit 112 refers to, through the API function, the determined outcome of the states, and determines whether or not to execute a scenario. When the scenario is executed, an event to request a startup of the scenario is issued to the scenario drive unit 113.

With the scenario startup request issued by the scenario execution request determining unit 112, the scenario drive unit 113 determines whether or not to perform the startup.

When it is determined to perform the startup, the scenario drive unit 113 requests the scenario data read-in unit 114 to read the scenario data. Further, according to the scenario data, the scenario driver unit 113 forwards a request on image processing and a request on the character's motions to the image processing unit 115. The scenario driver unit 113 also notifies the voice recognition control unit 116 of a dictionary used for the voice reorganization according to the scenario data. Further, the scenario drive unit 113 drives the scenario (controls the transition of scenes) by the voice recognition result or inputs by the user.

In addition, the scenario drive unit 113 drives the scenario (controls the transition of scenes) by referring to the records such as the driver information by the data record unit 118 through the API function.

The scenario data read-in unit 114 reads a pertinent scenario data from the scenario data file 302 based on the request by an event from the scenario drive unit 113. The scenario data read-in unit 114 also reads image data by the request by an event from the scenario drive unit 113.

The image processing unit 115 renders an image of a corresponding scene or of the character (agent) based on the request by an event from the scenario drive unit 113.

The voice recognition control unit 116 controls the instructions to a voice recognition unit 142. For example, the voice recognition control unit 116 specifies a dictionary for use which is notified by the scenario drive unit 113. When a voice recognition result by the specified dictionary for use comes out in the voice recognition unit 142, the voice recognition unit 116 issues an event corresponding to the recognized result to the scenario drive unit 113.

The user input reception unit 117 issues to the scenario drive unit 113 an event corresponding to the inputted content when receiving an input from the user. Whether a user made an input is determined by the information from the input control unit 16.

The data record unit 118 includes the API function to record the driver information and the like, and the API function to notify the driver information and the like.

Incidentally, while the units of the agent processing unit 17 have been explained for the case of issuing an event and the case of using the API function, the event issuing may be applied to all the units, or the API function usage may be applied to all the units.

In FIG. 1, the storage medium drive apparatus 23 and a communication control unit 24 are connected to the external I/F unit 12; a display apparatus 27 and an imaging apparatus 28 are connected to the image processing unit 13; a voice output apparatus 25 and a microphone (voice obtainer) 26 are connected to the voice control unit 14; a various states detecting apparatus 40 is connected to the state information processing unit 15; and an input apparatus 22 is connected to the input control unit 16.

The various states detecting apparatus 40 includes a present position detecting apparatus 41 and a state detecting unit 42. The current position detector 41 is for detecting an absolute position (by longitude and latitude) of the vehicle, and a GPS (global positioning system) reception apparatus 411 to measure the position of the vehicle by using an artificial satellite, an azimuth sensor 412, a steering angle sensor 413, a distance sensor 414, a beacon reception apparatus 415 to receive positional information from a beacon which is arranged over a road, and so forth are used.

While the GPS reception apparatus 411 and the beacon reception apparatus 415 are capable of measuring a location on its own, in a place where reception by the GPS reception apparatus 411 or the beacon reception apparatus 415 are impossible, a current position is supposed to be detected by a dead-reckoning navigation method using both the azimuth sensor 412 and the distance sensor 414.

For the azimuth sensor 412, for example, a geomagnetic sensor to evaluate the azimuth of the vehicle by detecting the geomagnetism, a gyro such as a gas-rate gyro and an optic-fiber gyro to evaluate the azimuth of the vehicle by detecting the roll angular velocity of the vehicle and integrating the angular velocity, wheel sensors to calculate the displacement amount by arranging sensors to the right and the left wheels and detecting the rounding of the vehicle by the output pulse difference (moved distance difference), and the like are used.

The steering angle sensor 413 detects a steering angle by using an optic rotation sensor installed on the rotating part of a steering, a rotation resistance volume, and the like.

The distance sensor 414 employs various methods, for example, a method which detects and counts the rotation number of the wheel, or a method which detects the acceleration and integrates it twice.

The distance sensor 414 and the rudder angle sensor 413 also function as driving operation state detector.

The state detecting unit 42 includes a brake sensor 421, a vehicle speed sensor 422, a direction indicator detector 423, a shift lever sensor 424, and a handbrake (parking brake) sensor 425 functioning as the driving operation state detector to detect the state of driving operations.

Further, the state detecting unit 42 includes an air conditioner detector 427, a wiper detector 428, and an audio detector 429 functioning as equipment manipulation state detector to detect the state of manipulation of equipment.

The brake sensor 421 detects whether or not the foot brake is in a pressed state.

The vehicle speed sensor 422 detects the speed of the vehicle.

The direction indicator detector 423 detects whether the driver is manipulating the direction indicator or not, as well as whether the direction indicator is flashing or not.

The shift lever sensor 424 detects whether or not the driver is manipulating the shift lever, as well as the position of the shift lever.

The handbrake (parking brake) sensor 425 detects whether or not the driver is manipulating the hand brake, as well as the state of the side brake (on or off).

The air conditioner detector 427 detects whether the driver is manipulating the various switches and the like of the air conditioner.

The wiper detector 428 detects whether the driver is manipulating the wiper or not.

The audio detector 429 detects whether or not the driver is manipulating the audio equipment such as a radio, CD player, and cassette player, and whether or not an audio output is being made by the audio equipment.

The state detecting unit 42 includes, as other equipment manipulation state detector, a light detecting sensor to detect the operation state of the headlight, dome light, and the like, a seatbelt detecting sensor to detect the fastening and unfastening of the seatbelt by the driver, and other sensors.

The input apparatus 22 is for the driver to input the driver information, as well as one of the means to respond to all of the remaining questions and the like by the agent in the present embodiment.

The input apparatus 22 is also for inputting: the current position at the start of driving (starting point) and the destination (arrival point) for the navigation processing; the predetermined traveling environment of the vehicle for which one would want to transmit a request for information such as traffic congestion information to an information providing station (transmission condition); the type (model) of the cell phone used in the vehicle; and so forth.

As the input apparatus 22, various equipment such as a touch panel (functioning as a switch), keyboard, mouse, light pen, joystick, remote controller by infrared or the like, and audio recognition equipment may be used. Further, a remote controller using infrared or the like and a reception unit to receive various signals transmitted from the remote controller may also be provided. In the remote controller, arranged besides a joystick to perform manipulation such as shifting the cursor displayed on the screen are various keys such as a menu specifying key (button) and a numeric keypad.

The input control unit 16 detects data corresponding to the inputted content by the input apparatus 22 and supplies it to the agent processing unit 11 and the navigation processing unit 10. The input control unit 16 functions as the equipment manipulation state detector by detecting whether the driver is in inputting operation or not.

The storage medium drive apparatus 23 is a drive apparatus to be used to read a computer program from an external storage medium for the navigation processing unit 10 and the agent processing unit 11 to perform various proceedings. In the computer programs stored in the storage medium, various programs, data, and the like are included.

Here, the storage medium means a storage medium to store computer programs, and more specifically, it includes a storage medium to store computer programs, by magnetic storage media such as a floppy disk, hard disk, and magnetic tape, semiconductor storage media such as a memory chip and IC card, storage media capable of reading information optically such as a CD-ROM, MO, PD (phase change rewritable optical disk), and other various methods.

Besides reading computer programs from these various storage media, if the storage media are writable storage media such as a floppy disk or IC card, the storage medium drive apparatus 23 is able to write in such storage media the data of the RAMs in the navigation processing unit 10, and the agent processing unit 11, or of a storage apparatus 29, or the like.

For example, by storing data such as the learning contents for the agent functions (learning item data/reply data) or driver information in an IC card, even when the driver drives a different vehicle, such data stored in the IC card can be read out and used, so that he/she can communicate with the agent which is in a state of having learned from his/her past responding states. Hence, it becomes possible to present, in the vehicle, not an agent for each specific vehicle but an agent having the learning contents unique to each driver.

It is also possible to store a scenario data in the IC card. Hereby an original scenario unique to each user is made possible.

The communication control unit 24 is capable of being connected to cell phones constituted by various wireless communication equipment. Besides communication over the phone circuit, the communication control unit 24 is configured to allow communications with the information provision station which provides traffic information data such as data on traffic congestion or traffic regulation, or with the information provision station which provides karaoke data to be used for an online karaoke in vehicle.

Further, it is also possible to transmit and receive through the communication control unit 24 the learning data for the agent functions, the scenario data file, and so forth.

The voice output apparatus 25 is composed of a plurality of speakers arranged in the vehicle, to output voice controlled by the voice control unit 14 such as the guidance voice when a route guidance is performed through voice, and the voice and sound for the agent's conversations for regular communications with the driver as well as for the agent's questions for obtaining driver information according to the present embodiment. The voice output apparatus 25 may also serve as an audio speaker.

The microphone 26 functions as a voice inputter to input and output voice which is the subject of the voice recognition by the voice control unit 14 such as the inputted voice for a destination and the like in the navigation processing, and conversations between the agent and the driver (including the replies by the driver) and the like. For this microphone 26, a dedicated directional microphone so as to properly collect the voice of the driver is used.

Note that the voice output apparatus 25 and the microphone 26 together may form a hand-free unit to allow phone communication without using the cell phone.

The microphone 26 and the voice recognition unit 142 function as a conversation detector to detect whether the driver is talking with a passenger, in which case the microphone 26 and the voice recognition unit 142 function as a state detector to detect the state of the driver.

The display apparatus 27 displays a road map for route guidance processed by the navigation processing unit 10, as well as various image information, or displays various behaviors (motion pictures) of the agent made by the agent processing unit 11 as well as various parts (components) constituting a screen layout. Further, the images of the inside and outside of the vehicle taken by the imaging apparatus 28 are displayed after being processed in the image processing unit 13.

For the display apparatus 27, various display apparatuses such as a liquid crystal display, CRT, and the like are used.

Note that the display apparatus 27 may also be equipped with a function as that of the aforementioned input apparatus 22 such as a touch panel or the like.

The imaging apparatus 28 is composed of cameras equipped with CCD (charge-coupled device) to take an image, and besides an in-vehicle camera to take an image of the driver, cameras are arranged outside of the vehicle to take images from the front, rear, right side, and left side of the vehicle. The images taken by each camera of the imaging apparatus 28 are supplied to the image processing unit 13, in which such processes as image recognition are made and each recognized result (whether with or without a passenger, recognitions on the driver, and so forth) are reflected in the communications by the agent.

The storage apparatus 29 is connected to the storage apparatus control unit 17 so as to read and write data and programs under the control of the storage control apparatus 17.

The storage apparatus 29 stores agent data 30 and navigation data 31 as the various data (including programs) necessary to realize various agent functions and navigation functions according to the present embodiment.

For the storage apparatus 29, for example, various types of storage media such as a floppy disk, hard disk, CD-ROM, optical disk, magnetic tape, IC card, optical card and the like as well as drive apparatus thereof are used.

In the case hereof, for example, a plurality of different storage media and drive apparatus may be the constituents in such a manner that, learning item data 304, reply data 305, driver information 307, and scenario data file 302 are included in IC cards or floppy disks which are easy to carry, while the other data are included in a hard disk, and these storage media may also be used as the drive apparatus.

The agent data 30 stores various types of data which are necessary for the processings by the agent, such as an agent program 301, the scenario data file 302, voice data 303, the learning item data 304, the reply data 305 composed of the voice data 303, image data 306 to display images of the figure or behavior of the agent, the driver information 307, and so forth.

The agent program 301 stores an agent processing program to realize the agent function.

The learning item data 304 and the reply data 305 are data to store the learning result by the agent based on the driving operations and replies by the driver.

Accordingly, for the learning item data 304 and the reply data 305, the data for each driver are stored and updated (learned).

The learning item data 304 stores items which are the subjects of learning for the agent, such as the total number of times or the number of times per day that the ignition is turned on, and the data on the volume of remaining fuel at the time of refueling for the last five times. According to the learning content stored in the learning item data 304, for example, the content of greetings by the agent at the time of appearance of the agent changes based on the number of times that the ignition is turned on, or, when the volume of the remaining fuel goes below the average of the volume of the remaining fuel for the last five times, the agent suggests refueling.

The reply data 305 stores, for each predetermined scenario, the past replies by the user to the behavior of the agent. The reply data 305 stores, for each reply item, the time and date of the reply and the content of the reply, for the predetermined number of times. Respective cases of being ignored, rejected, or accepted (tolerated) for the content of the response are determined based on the voice recognition or the inputted result in the input apparatus 22, and stored.

The scenario data file 302 stores the data of scenarios which specify behaviors of the agent for each condition or scene.

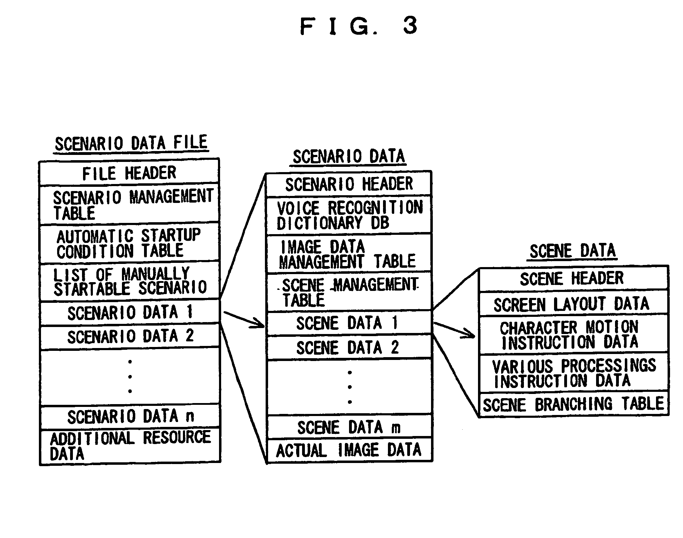

FIG. 3 conceptually shows the data structure and the data content of the scenario data file 302.

For the scenario data file 302, a plurality of scenario data defining each scene are aggregated to form one file.

The scenario data file 302 includes a file header, scenario management table, automatic startup condition table, list of scenarios which can be started up manually, various scenario data 1 to n, and additional resource data.

The file header is a header for a scenario file and stores the information on the file.

The scenario management table stores the data to manage the scenario data stored in the scenario file, such as the data on the priorities in executing each scenario data.

The automatic startup condition table specifies and stores, for each scenario data, the condition to automatically start up the scenario data stored in the scenario file.

As the automatic startup conditions, various automatic startup conditions are stored, such as the data on a specific point and the distance therefrom for a specific scenario which is performed when a point at a certain distance from a specific point A is reached, the turning-on of the ignition which is the condition for performing the scenario in which the agent performs a salutation at the time of the startup, and the predetermined time period after the startup.

Further, are stored as automatic startup prohibiting conditions to prohibit an automatic startup, for example: (A) to give priority to manual startup, (B) not to automatically startup when other scenario is performed, (C) not to start up a scenario which was performed within, for example, past 30 minutes, (D) not to start up when the music is heard, (E) not to start up when taking a curve to the right or to the left (when a steering operation is performed), (F) not to start up when rapidly decelerating or rapidly accelerating, (G) not to start up during a conversation with a passenger, (H) not to start up when operating various equipment such as a navigation apparatus, audio apparatus, air-conditioning apparatus, shift lever, handbrake, wiper, or direction indicator, (I) not to start up when the audio apparatus is used (a condition for not bothering the listening to the music or a broadcast station: not to turn on the audio apparatus), and (J) not to start up during a driving route guidance by the navigation processing unit 10. Note that the scenario management table establishes priorities so as to allow startup in case of emergency (such as in the scenario to make emergency contact with the fire station or the like), even when these automatic startup prohibition conditions are fulfilled. The automatic startup prohibition conditions include the conditions which are applied commonly to each scenario, and the conditions which are applied for each specific scenario.

In the present embodiment, as the conditions to startup the question scenario in which the agent poses questions to collect the driver information, the following conditions as well as other conditions are defined as the conditions to determine that the state of the load on the driver is in a low state:
(a) The question scenario has not been performed within the past one hour (a condition for not posing questions too frequently).
(b) Fifteen minutes or more have passed since the ignition is turned on (not a time immediate after the start of the driving).
(c) No conversation is heard in the vehicle (by collecting sound through the microphone 26).
(d) The vehicle is driving on a straight road (detected by the navigation data 31 and the current position), and the speed thereof has not changed for a predetermined period of time.
(e) The vehicle is waiting at a stoplight (determined by the navigation data 31, the current position, and the vehicle speed).

For these question-startup conditions, whether they are indispensable conditions or just one of them needs to be fulfilled for the startup is predetermined. For example, when being limited to the above conditions (a) to (e), the question-startup conditions are fulfilled and the question scenario is started up when (a) to (c) are entirely satisfied, and (d) or (e) is satisfied.

Even in this case, the question scenario is prohibited to be started up when it falls under the automatic-startup prohibition conditions starting from (A) described above.

Additionally, the startup determining routine based on the automatic startup conditions including the question-startup conditions is to be processed, for example, by a polling process every one minute, or by receiving an event specified in advance. The events specified in advance are a setting of a destination, reception of an e-mail, or the like.

Among the respective conditions referred to above, the load on the driving operation is determined by the conditions (E), (F), (H), (J), (d), and (e), while the extent of vexation felt by the driver is determined by (C), (D), (G), (I), (J), (a), (b), and (c).

A list of manually startable scenarios is stored as a list of data of manually startable scenarios among the data of scenarios stored in the scenario file.

As additional resource data, the voice data, image data, and the like to be added to the scenario data for extending the storage apparatus are stored.

Each of the scenario data 1 to n is composed of a scenario header, voice recognition dictionary DB, image data management table, scene management table, each scene data 1 to m, and actual image data. Each scenario includes a plurality of scenes.

The scenario header is the header section of the scenario data and stored therein is information on the scenario.

The voice recognition dictionary DB is a DB of the voice recognition dictionary used in a scenario, and stores voice recognition dictionary data.

The image data management table stores data to specify images to be used in the scenario. The image of the agent is stored in the image data 306, and the images unique to the scenario are stored in the actual image data which is at the end of the scenario data.

The scene data management table stores data to manage the scene data stored in the scenario.

Each of the scene data 1 to m is composed of a scene header, screen data, character motion instruction data, various processings instruction data, and scene branching table.

The scene header is the header section of the scene data, and there are stored therein data to manage information on the scene and each data section belonging to the scene data.

The screen layout data is the section to specify the screen layout displayed in a certain scene, and there are stored therein data on each part of the screen layout displayed on the display apparatus 27.

In the character motion instruction data, the instruction data on the motion and the content of speech by the character in a pertinent scene (data to instruct the voice data 303 to be used) are stored.

In the various processings instruction data, data to request a processing instruction to other modules (such as a navigator) in a pertinent scene are stored.

The scene branching table is a section which stores branching information from a pertinent scene to the subsequent scene, and stores data defining the subsequent scene when receiving an event during display of certain scene.

In the voice data 303 of the storage apparatus 29 (FIG. 1), voice data for the agent to conduct conversations and the like with the driver according to the scene of the selected scenario are stored. In the voice data of the conversation by the agent, voice data to pose a question in order to collect the driver information according to the present embodiment are also stored.

Each data of the voice data 303 is specified by the character motion instruction data of the scene data.

In the image data 306, images to represent the figure of the agent to be used in each scene specified by the scenario, for example, a front facing agent image, a bowing image, a right-hand raising image, and the like are stored.

The figures of the agent stored in the image data 306 may not necessarily be a human-like figure (male or female), and may be a figure of an animal as it is such as, for example, a chick, dog, cat, frog, or mouse, or a figure of personifiedly designed (illustrated) animal, and furthermore may be a robot-like figure or a figure of a specific character. Further, the agent does not need to stay in a fixed age, and may be a figure that is initially a child, growing over time, and changing (changing into a figure of an adult, then into a figure of an old person), by the learning function of the agent. In the image data 306, these images of various figures of the agent, which can be selected through the input apparatus 22 and the like according to the driver's preferences, are stored.

The driver information 307 is the information on the driver, and is used to make the behaviors by the agent better suit the driver's demands, tastes, and preferences.

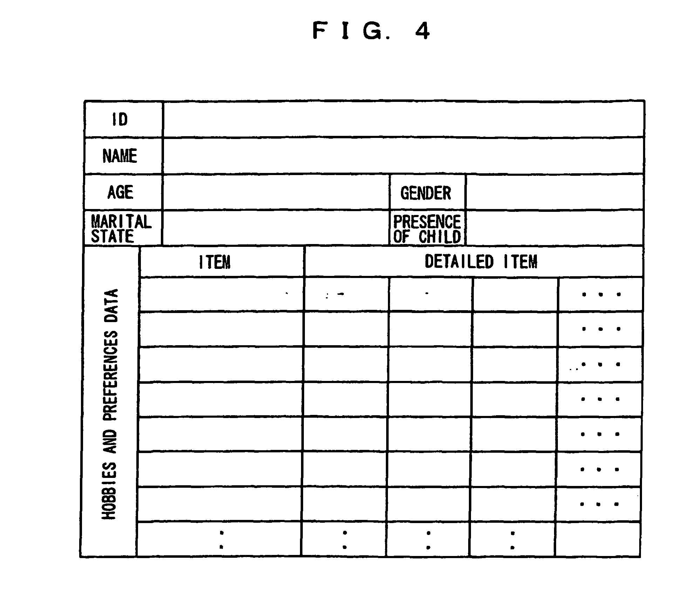

FIG. 4 conceptually shows the composition of the driver information 307.

As shown in FIG. 4, the driver information 307 stores the basic driver data such as the driver's ID (identification data), name, age, gender, marital state (married or not married), having or not having a child, the number of children, and the age of the children, as well as data on hobbies and preferences.

The hobbies and preferences data are composed of the major items such as sport, dining, and travel, and the detailed items included in the major item. For example, a major item stores detailed data on the favorite soccer team, favorite baseball team, interest in golf, and the like.

In the present embodiment, priorities are set for each of the driver information, and the agent poses a question to a driver on the driver information not stored, in the order of descending priorities. The priority of the basic driver data is higher than that of the hobbies and preferences data.

The questions to obtain the driver information are asked by outputting the voice data specified in the character motion instruction data in the question scenario stored in the scenario data file 302.

As the question sentences for the agent to obtain the driver information in the question scenario, the following sentences and the like are prepared:
"What is your name?"
"Will you tell me your age?"
"Will you tell me your gender?"
"What is your hobby?"
"Are you interested in baseball?"
"Are you interested in golf?"
"Are you interested in soccer?"
"Are you interested in music?"
"Which genre of music do you like?"
"What is your favorite soccer team?"
"What is your favorite baseball team?" "
"Do you like hamburger?"
"When you dine out, do you go to a family restaurant most of the time?"

These questions are stored in the character motion instruction data in the scenario data file 302 as the question sentences for each question scenario.

The data of each question sentence is delimited by each voice data stored in the voice data 303 in such a manner as, for example, "What is/your/favorite/baseball team?". The question is asked by the agent to the driver by reading out a voice data corresponding to a delimited unit in the question sentence, and outputting it from the voice output device 25.

The navigation data 31 stores, as the various data to be used for the route guidance and so forth, various data such as a communication region data file, picturized map data file, intersection data file, node data file, road data file, search data file, photo data file, and the like.

The communication region data file stores, by each type of cell phones, communication region data to be used to display on the display apparatus 27 a region in which a cell phone used in the vehicle by connecting or not connecting to the communication control 27 can communicate from the inside of the vehicle; or to use such a communicatable region when searching the route.

The picturized map data file stores data of picturized maps which are picturized in the display apparatus 27. This picturized map data stores hierarchized maps, for example, map data for each tier such as, beginning from the highest tier, Japan, Kanto District, Tokyo, and Kanda. To each tier of the map data, a map code is respectively given.

In the intersection data file, the intersection number to specify each intersection, intersection name, coordinate of an intersection (longitude and latitude), number for a road whose starting point or endpoint is at the intersection, presence of stoplights, and so forth are stored as the intersection data.

In the node data file, node data composed of information such as the longitude and the latitude to define a coordinate of each point of each road is stored. In other words, this node data is a data on one point along a road, and where a connector between nodes is defined as an arc, a road is represented by connecting between the plural node columns by the arc.

The road data file stores the road number to specify each road, number for an intersection being a starting point or an end point, numbers for roads having the same starting point or end point, width of a road, prohibition information such as prohibition of entry, photo number for photo data which will be referred later, and the like.

The road network data composed of the intersection data, node data, and road data stored respectively in the intersection data file, node data file, and road data file are used to search a route.

In the search data file, intersection column data, node column data and the like composing the routes generated by the route search are stored. The intersection column data includes information such as the intersection name, intersection number, number for a photo of a characteristic view of the intersection, turning point, distance, and the like. Further, the node column data includes information to indicate the position of the node such as the east longitude and the north latitude.

In the photo data file stored are photographs of a characteristic view or the like which is seen at each intersection or when traveling straight, by relating them to the photo number thereof, in the form of digital, analogue, or negative film.

The operations of thus structured driver information collecting apparatus will be explained next.

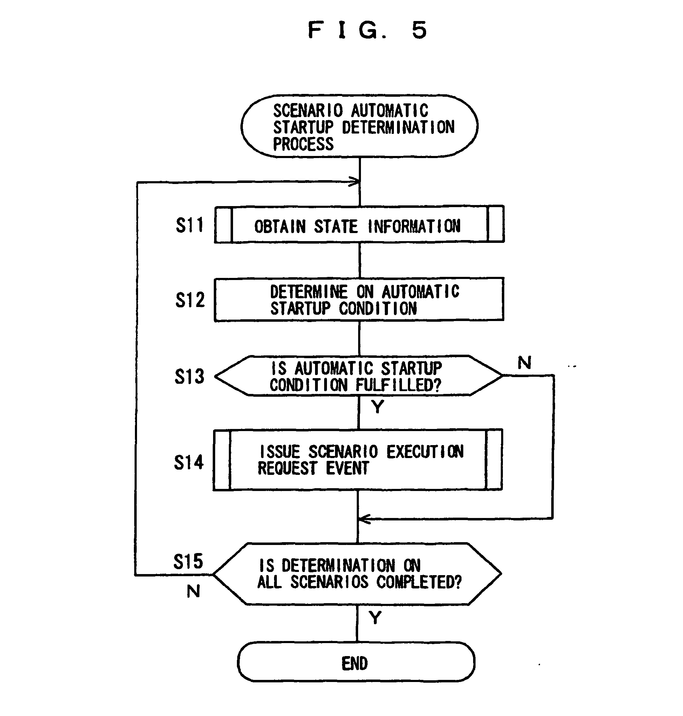

FIG. 5 is a flowchart showing operations of the scenario automatic startup determination process. The routine of the scenario automatic startup determination process performs the automatic startup determination for all the scenarios registered in a predetermined period of time (by the minute, for example). Further, when a change of a state is deemed to be substantial (for example, when a destination is set, and so forth), the state determining unit 111 issues an event, and the scenario execution request determination unit 112 performs determination on an automatic startup for all the scenarios when receiving the event.

The scenario execution request determining unit 112 in the agent processing unit 11 obtains the current state or a change of the state from various data provided by the state determining unit 111 (step 11), and performs determination on the scenario startup conditions (including whether the state of the load on the driver is in a low state or not which is the startup condition in the present embodiment) stored in the automatic startup condition table of the scenario data file 302. Further, in the present embodiment, when the event is for executing a question scenario, the scenario drive unit 113 checks out the driver information which has not been collected in the driver information 307 and the priorities thereof, and determines a question which corresponds to the driver information of the highest priority (step 12).

Subsequently, whether the automatic startup conditions are fulfilled is determined (step 13), and when the conditions are fulfilled (step 13; Y), the scenario execution request determining unit 112 issues to the scenario drive unit 113 an execution request event for the scenario which fulfills the automatic startup conditions (step 14). On the other hand, when the automatic startup condition is not fulfilled (step 13; N), a transition to the step 15 is made without issuing the scenario execution request event.

Subsequently, it is determined whether the determination on the automatic startup conditions for all the scenarios is completed, and if not (step 15; N), a return to the step 11 is performed and the determination on the next scenario is carried out. When the determination on the all scenarios is completed (step 15; Y), the scenario execution request determination unit 112 completes the processing.

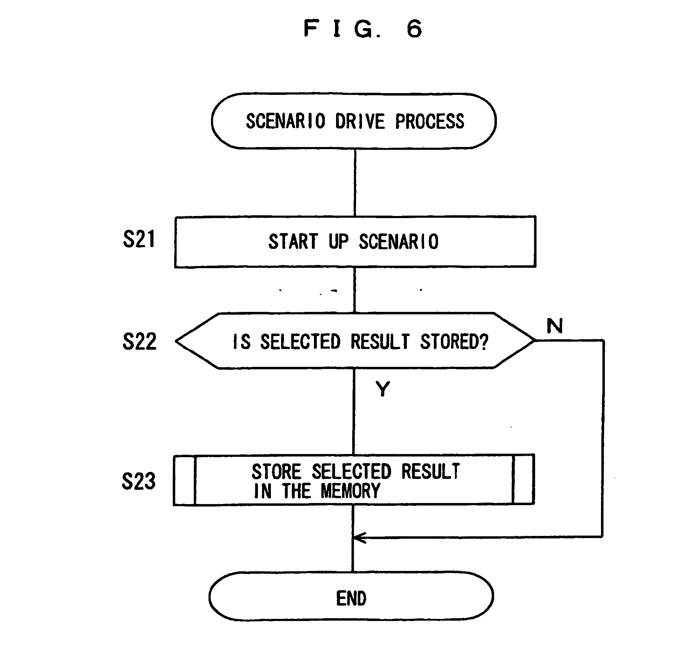

FIG. 6 is a flowchart showing operations of the scenario drive processing.

On receiving the scenario execution request event, the scenario drive unit 113 executes the scenario drive processing, and starts up the scenario which is requested (step 21)

Subsequently, the scenario drive unit 113 determines, for each scene of the started scenario, whether or not it is instructed to store the selected result (step 22). If it is instructed to store the selected result (step 22; Y), such a result selected by the driver (a reply to the question) is stored (step 23). Hence, in the case of a question scenario, new driver information can be collected from the driver's reply and stored in the driver information 307.

After storing the driver information (step 23), or when a storage instruction is not given in the step 22 (step 22; N), the processing is terminated.

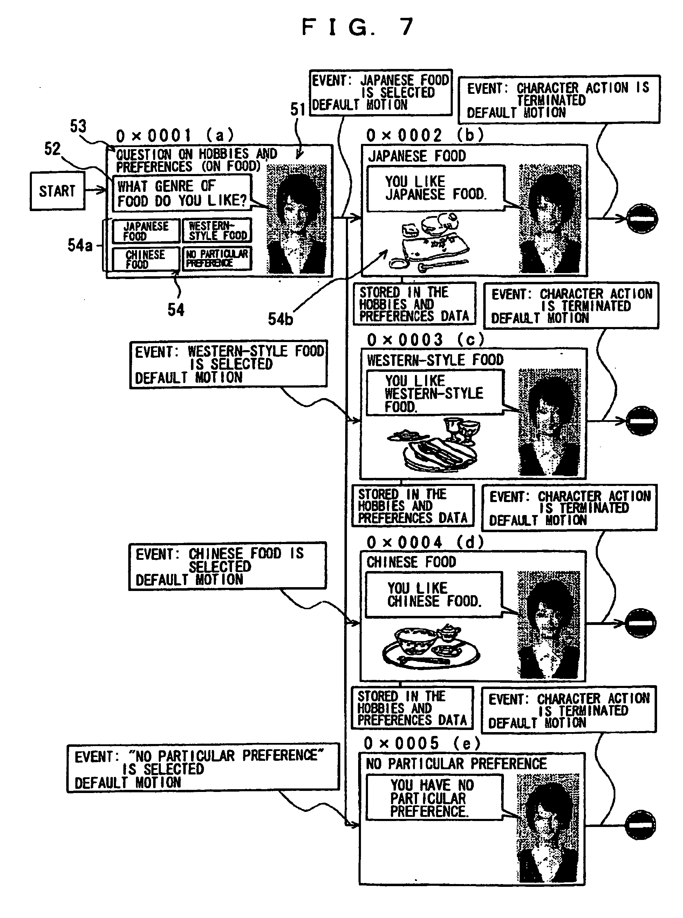

FIG. 7 shows a transition of scene screens of a question scenario on hobbies and preferences (on food) among the question scenarios, by presenting each scene.

The scene screen includes, as shown in FIG. 7 (A), an agent display screen 51 to display an image of the agent (still image/moving image), a word balloon screen 52 to display a text corresponding to the voice of the agent, title screen 53, and scene display screen 54 to display image data specific to each scene (images of the actual image data, answer selecting button, and the like).

As shown in FIG. 7, when the question scenario on preferences and hobbies (on food) are started up, the agent processing unit 11 reads out, from the scenario data file 302, the screen layout data of the scene which is specified by the scene header at the beginning, displays it on the display apparatus 27, and at the same time outputs from the voice output apparatus 25 the question-asking voice corresponding to the question sentence.

Subsequently, the agent processing unit 11 specifies to the voice recognition unit 142 a voice dictionary if the reply by the driver to the question is inputted by voice. In the case of the first scene 0x0001 shown in FIG. 7(a), the dictionary for voice recognition for four answering buttons 54a, which are "Japanese food", "Western-style food", "Chinese food", and "no particular preference", is specified as the dictionary for the voice recognition.

In the case of the question scenario in FIG. 7, the agent processing unit 11 displays, in the scene 0x0001 shown in (a), "what genre of food do you like?" in the word balloon screen 52, and at the same time outputs the voice corresponding to the presentation in the word balloon screen 52 from the voice output apparatus.

This scene of asking a question to the driver is followed by the plural scenes branched according to the answer by the driver (one of FIG. 7(b) to (e)).

Accordingly, when the driver selects "Japanese food" in the scene of (a), the agent processing unit 11 displays the scene screen of the branched scene 0x0002 of FIG.7 (b). In this scene screen, "Japanese food" which has been selected is displayed in the title screen 53, at the same time the word balloon screen "You like Japanese food." is displayed, and the corresponding voice is outputted. Additionally, in the branched scene screen of FIG. 7(b), the actual image 54b of the Japanese food is read out of the scenario data and displayed in the scene display screen 54.

Further, the agent apparatus unit 11 stores the driver's answer, for example, "Japanese food" in the hobbies and preferences data of the driver information 307 as the driver information (FIG. 6, step 23).

Hence, the agent processing unit displays and outputs each scene image and voice specified by the scenario sequentially until the last scene.

In the case of the question scenario of FIG. 7, the agent processing unit 11 terminates the action by the character through the agent because the scenes (b) to (e) are the last scene.

Further, the agent processing unit 11 terminates the processing when an end is selected by the driver through turning-off of the ignition or selection of an ending button (step 15; Y), and when not to be ended (step 15; N), returns to the step 11 and determines on an execution of the subsequent scenario.

As has been explained, with the present embodiment, the question scenario by the agent is performed, and the driver information is obtained from the answer thereto, so that the driver's operations of inputting the data on himself/herself are reduced.

Additionally, since the question scenario by the agent stipulates the startup condition of the scenario to be the case of the load on the driver being low, there is such effect as that the scenario does not place a burden on the driving operations by the driver, and the driver is less vexed by the questions.

While one embodiment of the driver information collecting apparatus in the present embodiment has been explained so far, the present invention is not limited to the embodiment explained, and various modification thereto are possible within the range described in each of the claims.

For example, in the embodiment which has been explained, is explained the case to determine the state of the load on the driver based on both the scenario startup conditions regarding the load on the driving operations and the scenario startup conditions regarding the vexation felt by the driver, but the state of the load may be determined based on one of these cases.

Further, in the embodiment explained above, as the scenario automatic startup conditions to determine the state of the load on the driver, (A) to (J) and (a) to (e) are cited and explained, but the present invention is not limited to this, and other conditions may be applied as long as they are conditions related with the determination on the load on the driver.

For example, conditions such as: the steering angle is above the predetermined value; the wiper is moving at a higher-than-predetermined speed; the ringtone of the cell phone is detected; the cell phone is in use; the vehicle speed V is, for example, 150 km per hour or faster; and so forth may be adopted as the case that the load is high.

Further, where a radio or television is installed on the vehicle, an automatic startup prohibition condition not to start up the question scenario when the radio or the like is ON may be established, while, as a condition which is given priority thereto, the reception of a commercial may be set as a startup condition of the question scenario. In this case, a commercial detecting sensor to detect reception of a commercial should be provided

Each of the conditions referred to above may be used by itself or in any combination with other conditions, as a condition for a specific scenario or a condition common for plural scenarios.

Further, in the embodiment explained above, the conditions to start up each scenario regarding all the actions by the agent are determined by the state of vehicle, condition of the driver (including the state of the load), and the learning condition of the agent.

Further to this, the psychological distance between the agent and the driver may be determined and the scenario startup conditions according to the psychological distance may be added. As a result, the startup conditions on a specific scenario are modified according to the psychological distance between the agent and the driver.

Here, the psychological distance between the agent and the driver is expressed by such parameters as the degree of friendliness, degree of self-confidence, degree of amenability, degree of morality, and so forth, and transforms itself by the accumulated past replies and the like by the driver. For example, when words of appreciation are spoken for the agent's action, the psychological state of the agent becomes such that the friendliness is increased, and the suggestion such as whether to play a CD becomes more frequent, but in contrast, when the agent is cursed, the psychological state of the agent becomes such that the friendliness is reduced, and the actions such as actively suggesting to open the window, play a CD, and so forth are reduced.

Further, it is also possible to make a change into a friendly and casual way of speaking or a businesslike way of speaking, according to the parameter value of the psychological distance. In this case, the character motion instruction data (see FIG. 3) for each scene according to the parameter value for each psychological distance should be stored.

When the scenario startup conditions according to the psychological distance between the agent and the driver are added as referred to above, an agent psychology unit is added to the composition of the agent processing unit shown in FIG. 2. For example, this agent psychology unit determines the psychological state of the agent by receiving an event on the result of the determination on the state from the state determining unit 111. Further, in the agent psychology unit, there are a process to change the parameter of the psychological state of the agent, as well as a process to notify of the agent's psychological state. Subsequently, the scenario drive unit 113 refers to the psychological state of the agent, and drives the scenario (controls the transition of the scene).

### Industrial Availability

With the present invention, the driver information can be automatically collected through the communications between the agent and the driver. Accordingly, the driver information inputting operations by the driver are reduced.

## Claims

1. A driver information collecting apparatus, comprising:
a load-on-driver detector to detect a load on a driver;
a question outputter to output a question on the driver when a low-load state is detected by said load-on-driver detector; and
an information obtainer to obtain driver information based on a reply by the driver to the question by said question outputter.

2. The driver information collecting apparatus according to claim 1, further comprising:
a driver information storage to store driver information;
a question information storage to store a question for obtaining said driver information, wherein
said question outputter reads out, from said question information storage, a question which corresponds to a driver information not stored in said driver information storage, and outputs the question.

3. The driver information collecting apparatus according to claim 1 or claim 2, wherein:
as a state of a driver detected by said state detector, at least one of a state of driving operation and a state of equipment manipulation is detected; and
the load on the driver determined by said load-on-driver detector is at least one of a load on the driving operations and an extent of vexation felt by the driver.

4. The driver information collecting apparatus according to claim 1, claim 2, or claim 3, further comprising an agent presenter to present an artificial pseudo-living organism in the vehicle, wherein said question outputter poses a question through at least one of a display screen and voice output.

## Patentansprüche

1. Fahrerinformations-Sammelvorrichtung mit:
einem Fahrerbelastungs-Detektor, um eine Fahrerbelastung zu detektieren;
einer Frageausgabevorrichtung zum Ausgeben einer Frage an den Fahrer, wenn ein geringer Belastungszustand durch den Fahrerbelastungszustands-Detektor detektiert wird; und
einer Informations Gewinnungsvorrichtung zum Gewinnen von Fahrerinformation auf der Basis einer Antwort des Fahrers auf die Frage der Frageausgabevorrichtung.

2. Fahrerinformations-Sammelvorrichtung nach Anspruch 1, ferner aufweisend:
einen Fahrerinformationsspeicher zum Speichern von Fahrerinformation;
einen Frageinformationsspeicher zum Speichern einer Frage zum Gewinnen der Fahrerinformation, wobei
die Frageausgabevorrichtung aus dem Frageinformationsspeicher eine Frage ausliest, welche einer nicht in dem Fahrerinformationsspeicher gespeicherten Fahrerinformation entspricht, und die Frage ausgibt.

3. Fahrerinformations-Sammelvorrichtung nach Anspruch 1 oder 2, wobei:
ein Zustand einer Fahroperation und/oder ein Zustand einer Gerätebetätigung als ein von dem Zustandsdetektor detektierter Fahrerzustand detektiert wird und
die von dem Fahrerbelastungs-Detektor ermittelte Fahrerbelastung eine Belastung durch Fahroperationen und/oder ein Maß einer von dem Fahrer gefühlten Belästigung ist.

4. Fahrerinformations-Sammelvorrichtung nach Anspruch 1, 2 oder 3, welche ferner eine Agenten-Präsentationseinrichtung aufweist, um einen künstlichen pseudo-lebendigen Organismus in dem Fahrzeug zu präsentieren, wobei die Frageausgabevorrichtung eine Frage über einen Anzeigebildschirm und/oder eine Sprachausgabe stellt.

## Revendications

1. Un dispositif de collecte d'information conducteur, comprenant :
- un détecteur de charge conducteur, pour détecter une charge conducteur;
- un émetteur de question pour émettre une question au conducteur lorsqu'un état de faible charge est détecté par ledit détecteur de charge conducteur; et
- un organe d'obtention ou « obtenteur » d'information pour obtenir une information conducteur d'après une réponse faite par le conducteur à la question posée par ledit émetteur de question.

2. Le dispositif de collecte d'information conducteur selon la revendication 1, comprenant en outre :
- un stockage d'information conducteur pour stocker de l'information conducteur;
- un stockage d'information de question pour stocker une question pour obtenir ladite information conducteur,
dans lequel ledit émetteur de question lit, dans ledit stockage d'information de question, une question qui correspond à une information conducteur n'ayant pas été stockée dans ledit stockage d'information conducteur, et fournit en sortie la question.

3. Le dispositif de collecte d'information conducteur selon la revendication 1 ou la revendication 2, dans lequel :
- en tant qu'état d'un conducteur détecté par ledit détecteur d'état, au moins l'un parmi un état d'action de conduite et un état de manipulation d'équipement est détecté; et
- la charge conducteur, déterminée par ledit détecteur de charge conducteur, est au moins l'une d'une charge appliquée lors des opérations de conduite et un degré de vexation ressenti par le conducteur.

4. Le dispositif de collecte d'information conducteur selon la revendication 1, la revendication 2, ou la revendication 3, comprenant en outre un présentateur d'agent, pour présenter un organisme artificiel pseudo-vivant dans le véhicule, dans lequel ledit émetteur de question pose une question via au moins l'un, parmi un écran d'affichage et une sortie vocale.
